# EUROPEAN PATENT APPLICATION

(11) **EP 4 811 511 A1**
(43) Date of publication of application: **23.09.2026**
(21) Application number: 26165914.8
(22) Date of filing: 18.03.2026
(51) Int. Cl.: H01M 50/176, H01M 50/528, H01M 50/54, H01M 50/553, H01M 50/566

(54) **CURRENT COLLECTOR AND BATTERY CELL HAVING THE SAME**

(30) Priority: 19.03.2025 KR 20250035185; 23.02.2026 KR 20260033013
(71) Applicant: SK On Co., Ltd., Seoul 03161 (KR)
(72) Inventor: PARK, Seong Che, 34124 Daejeon (KR); KWAK, Seung Ho, 34124 Daejeon (KR); CHEONG, Hoemin, 34124 Daejeon (KR); JU, Seung Hoon, 34124 Daejeon (KR)
(74) Representative: Stolmár & Partner Patentanwälte PartG mbB

(57) **Abstract**

A battery cell is disclosed. In some implementations, the battery cell includes: an electrode assembly; a cell case; a cap plate; an electrode terminal including a coupling hole; and a current collector, wherein the current collector includes a current collecting plate and a current collecting pin connected to the current collecting plate and inserted into the coupling hole, the current collecting pin includes a first portion disposed at an outer side spaced apart from the current collecting plate, a third portion connected to the current collecting plate, and a second portion disposed between the first portion and the third portion, and at least one of an outer diameter of the second portion or a maximum outer diameter of the third portion is greater than an outer diameter of the first portion.

## Description

### TECHNICAL FIELD

The disclosure and implementations disclosed in this patent document generally relate to a current collector applied to a battery cell (a secondary battery) capable of being charged with and discharged of electricity, and a battery cell including the same.

### BACKGROUND

Unlike a primary battery, a secondary battery is capable of being charged with and discharged of electricity and may thus be applied to devices within various fields such as a digital camera, a mobile phone, a laptop computer, a hybrid vehicle, and an electric vehicle.

Such a secondary battery may be manufactured as a pouch-type cell having flexibility or as a can-type cell having rigidity. The can-type cell may be classified as a prismatic cell, a cylindrical cell, a coin cell, but is not limited thereto, according to an external shape thereof.

A plurality of battery cells may be arranged in a specific form to form a battery assembly. At least one battery assembly may be configured as various types of battery devices such as a battery module, a battery pack, and an energy storage system.

### SUMMARY

A conventional battery cell may include an electrode assembly accommodated in a cell case and an electrode terminal connected to each other by a current collector. The current collector may include a current collecting plate electrically connected to the electrode assembly and a current collecting pin electrically connected to the electrode terminal.

The current collecting pin may have a protrusion having a predetermined thickness and extending from the current collecting plate. When charging and discharging of the battery cell are performed, heat may occur in the current collector. Among portions of the current collecting pin, a portion of the current collecting pin connected to the current collecting plate may have a smaller diameter (cross-sectional area) than a diameter of the current collecting plate. Accordingly, due to high resistance, a large amount of heat may occur in the portion of the current collecting pin connected to the current collecting plate, thereby reducing not only performance and lifespan of the battery cell but also damaging the electrode assembly.

In addition, when a diameter of the current collecting pin is increased to reduce heat occurring in the current collecting pin, a welding path may become longer when the current collecting pin and the electrode terminal are welded, thereby increasing a welding heat input. Accordingly, due to welding heat, a temperature of the current collector may increase, thereby causing damage to components adjacent to the current collector, such as the electrode assembly.

The present disclosure may be implemented in some embodiments to provide a current collector capable of reducing heat occurring in the current collector due to an increase in resistance of the current collector during charging and/or discharging of a battery cell, and the battery cell including the same.

The present disclosure may be implemented in some embodiments to provide a current collector capable of preventing or reducing deterioration of performance and lifespan of a battery cell, and the battery cell including the same.

The present disclosure may be implemented in some embodiments to provide a current collector capable of reducing or preventing damage to an electrode assembly due to welding heat, and a battery cell including the same.

The current collector according to the present disclosure and the battery cell including the same may be widely applied in green technology fields such as an electric vehicle, a battery charging station, solar power generation using a battery, or wind power generation using a battery. In addition, the current collector of the present disclosure and the battery cell including the same may be used in an eco-friendly electric vehicle, a hybrid vehicle, but is not limited thereto, for suppressing air pollution and greenhouse gas emission to prevent climate change.

In some embodiments of the present disclosure, provided is a battery cell including: an electrode assembly including a cathode, an anode, and a separator; a cell case accommodating the electrode assembly; a cap plate connected to the cell case and including a through-hole; an electrode terminal disposed in the through-hole of the cap plate and including a coupling hole; and a current collector electrically connecting the electrode assembly and the electrode terminal, wherein the current collector includes a current collecting plate electrically connected to the electrode assembly and a current collecting pin connected to the current collecting plate and inserted into the coupling hole, the current collecting pin includes a first portion disposed at an outer side spaced apart from the current collecting plate, a third portion connected to the current collecting plate, and a second portion disposed between the first portion and the third portion, and at least one of an outer diameter of the second portion or a maximum outer diameter of the third portion is greater than an outer diameter of the first portion.

An outer diameter of at least a portion of the third portion may be greater than the outer diameter of the first portion and equal to or greater than the outer diameter of the second portion.

In a cross-section perpendicular to a first direction in which the current collecting pin extends from the current collecting plate, an outer circumferential surface of the current collecting pin may have a circular cross-section.

The coupling hole of the electrode terminal may include a first region in contact with a side surface (e.g., lateral surface) of the first portion and a second region in contact with a side surface (e.g., lateral surface) of the second portion.

The electrode terminal may include a first body exposed on an outer surface of the cap plate and a second body connected to the first body and inserted into the through-hole of the cap plate.

The second body may have a rivet structure for coupling the cap plate to the first body.

The electrode terminal may have the first body and the second body integrally formed as a single body and the electrode terminal may be rivet-coupled to the cap plate.

The first portion of the current collecting pin and the electrode terminal may be welded along a boundary between the first portion and the electrode terminal.

The first portion and the second portion of the current collecting pin may be connected by a connection surface, and the connection surface may have a diameter increasing from the first portion toward the second portion.

The outer diameter of the first portion may be 1 mm or more, and the outer diameter of the second portion may be 1.05 times or more the outer diameter of the first portion and smaller than an inner diameter of the through-hole.

The maximum outer diameter of the third portion may be greater than the outer diameter of the second portion.

The third portion of the current collecting pin may include a coupling portion inserted into and coupled to an insertion hole formed in the current collecting plate and a diameter expansion portion having a diameter greater than the outer diameter of the second portion.

The current collecting pin and the current collecting plate may be welded.

The current collecting pin and the current collecting plate may be integrally formed as a single body.

In some embodiments of the present disclosure, provided is a current collector for a battery cell, the current collector including: a current collecting plate; and a current collecting pin connected to the current collecting plate, wherein the current collecting pin includes a first portion disposed at an outer side spaced apart from the current collecting plate, a third portion connected to the current collecting plate, and a second portion disposed between the first portion and the third portion, and at least one of an outer diameter of the second portion or a maximum outer diameter of the third portion is greater than an outer diameter of the first portion.

An outer diameter of at least a portion of the third portion may be greater than the outer diameter of the first portion and equal to or greater than the outer diameter of the second portion.

### BRIEF DESCRIPTION OF DRAWINGS

Certain aspects, features, and advantages of the present disclosure are illustrated by the following detailed description with reference to the accompanying drawings.
FIG. 1 is a perspective view of a battery cell according to a preferred embodiment.
FIG. 2 is an exploded perspective view of the battery cell illustrated in FIG. 1.
FIG. 3 is a longitudinal cross-sectional view taken along line I-I' of FIG. 1.
FIG. 4 is an exploded perspective view of a cap assembly according to a preferred embodiment.
FIG. 5 is a cross-sectional view of the cap assembly illustrated in FIG. 4.
FIG. 6 is a perspective view of a current collector according to a preferred embodiment.
FIG. 7 is a cross-sectional view of the current collector illustrated in FIG. 6.
FIG. 8 is a cross-sectional view illustrating a modified example of the current collector illustrated in FIG. 7.
FIG. 9 is a perspective view illustrating a state before the cap assembly and the current collector are coupled to each other according to a preferred embodiment.
FIG. 10 is a cross-sectional view taken along line II-II' of FIG. 1 and illustrating states before and after the cap assembly and the current collector are coupled to each other according to a preferred embodiment.
FIG. 11 is a cross-sectional view illustrating a state in which a cap assembly and a current collector are coupled to each other according to a comparative example.
FIG. 12 is a cross-sectional view illustrating states before and after the cap assembly and the current collector are coupled to each other according to another preferred embodiment.
FIG. 13 is a perspective view of a battery cell according to another preferred embodiment.
FIG. 14 is a perspective view of a battery cell according to another preferred embodiment.
FIG. 15 is a perspective view of a battery device according to a preferred embodiment.

### DETAILED DESCRIPTION

Features of the present disclosure disclosed in this patent document are described by example embodiments with reference to the accompanying drawings.

The present disclosure may be implemented in some embodiments to provide a current collector and a battery cell including the same.

Hereinafter, the present disclosure will be described in detail with reference to the accompanying drawings. However, the present disclosure is merely illustrative and is not limited to the specific embodiments exemplarily described.

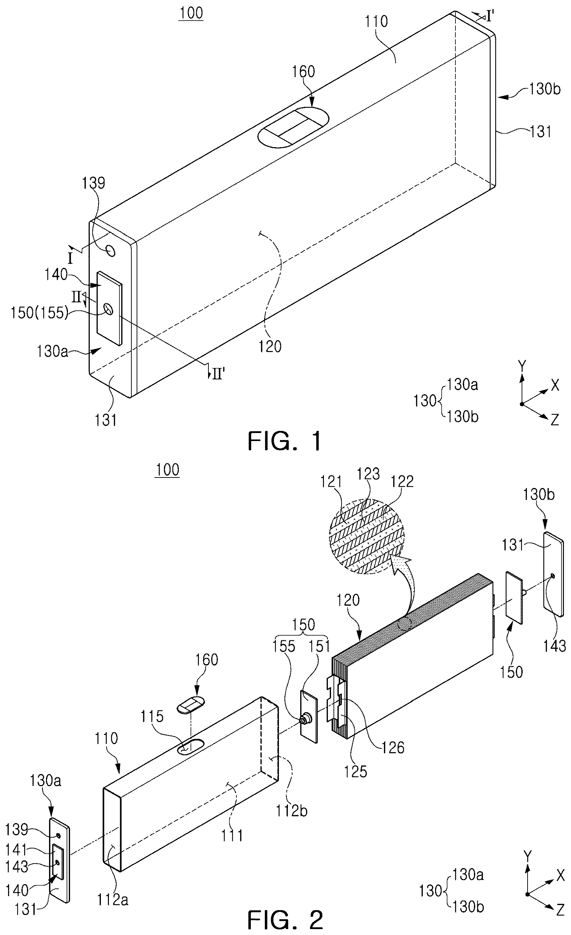

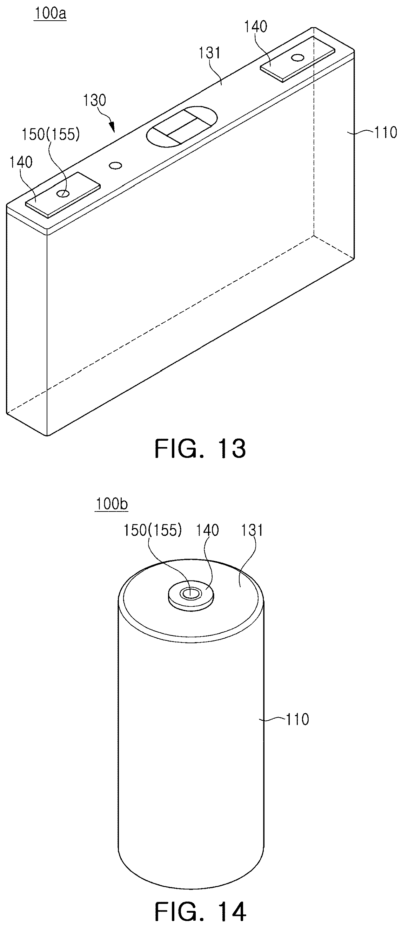

Hereinafter, a battery cell of the present disclosure is described with reference to FIGS. 1 through 14. In FIGS. 1 through 13, the battery cell of the present disclosure is described by taking a prismatic cell as an example. However, the battery cell of the present disclosure is not limited to the prismatic cell and may also be applied to a cylindrical cell as illustrated in FIG. 14.

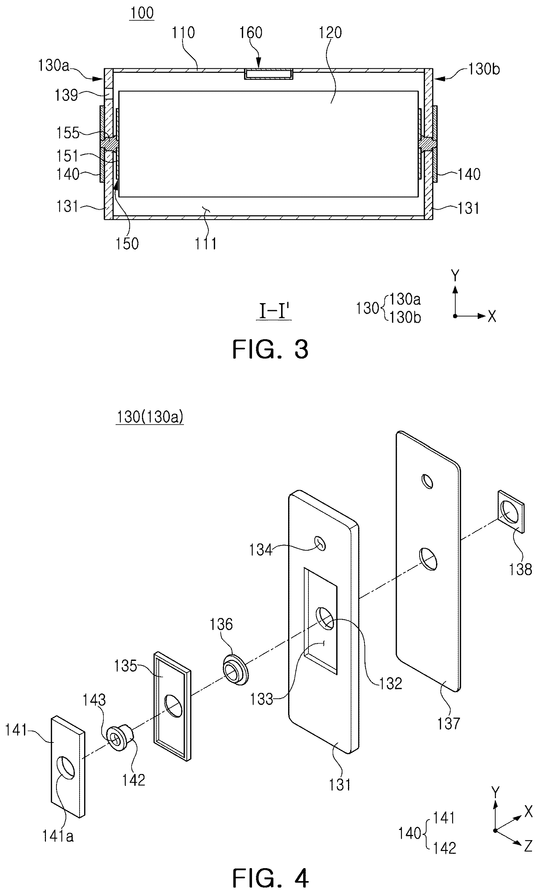

FIG. 1 is a perspective view of a battery cell 100 according to a preferred embodiment, FIG. 2 is an exploded perspective view of the battery cell 100 illustrated in FIG. 1, and FIG. 3 is a longitudinal cross-sectional view taken along line I-I' of FIG. 1.

Referring to FIGS. 1 through 3, the battery cell 100 according to a preferred embodiment may include an electrode assembly 120 including a cathode 121, an anode 122, and a separator 123, a cell case 110 accommodating the electrode assembly 120, a cap plate 131 connected to the cell case 110 and including a through-hole 132 (see FIG. 4), an electrode terminal 140 disposed in the through-hole 132 (see FIG. 4) of the cap plate 131 and including a coupling hole 143, and a current collector 150 electrically connecting the electrode assembly 120 and the electrode terminal 140.

The cell case 110 and the cap plate 131 may form an exterior of the battery cell 100 and may form a space accommodating the electrode assembly 120.

The cell case 110 may form an accommodation space 111 accommodating the electrode assembly 120. For example, the cell case 110 may form the accommodation space 111 having a tube shape. In the case of a prismatic cell, the cell case 110 may have a rectangular cross-section that extends.

The cell case 110 may have at least one of both ends that is open. For example, the cell case 110 may have a first opening 112a and a second opening 112b disposed at one side and the other side of the accommodation space 111, respectively. However, the cell case 110 may have only one of both ends of the cell case 110 that is open (see FIG. 13).

The electrode assembly 120 may include the cathode 121, the anode 122, and the separator 123. The cathode 121 and the anode 122 may be disposed while having the separator 123 interposed therebetween. For example, the electrode assembly 120 may have a wound structure in which the cathode 121, the anode 122, and the separator 123 are wound. However, the electrode assembly 120 of the present disclosure is not limited to the wound structure. For example, the electrode assembly 120 of the present disclosure may have a stacking shape, a zigzag-folding shape, or a stack-folding shape.

Each of the cathode 121 and the anode 122 may include an electrode tab 125. The electrode tab 125 may be defined as a region in which an active material is not coated for electrical connection with the current collector 150 in each of the cathode 121 and the anode 122. The electrode tab 125 may include a cathode tab disposed in the cathode 121 and an anode tab disposed in the anode 122.

The cap plate 131 may be connected to the cell case 110. The cap plate 131 may be connected to at least one of both ends of the tube-shaped cell case 110. The cap plate 131 may be manufactured separately from the cell case 110 and then may cover an open end of the cell case 110. For example, the cap plate 131 may be welded to the open end of the cell case 110. However, a connection structure between the cell case 110 and the cap plate 131 is not limited to the above-described structure, and for example, the cap plate 131 and the cell case 110 may be integrally formed.

The cap plate 131 may include an electrolyte injection hole 134 (see FIG. 4) for injecting an electrolyte into the accommodation space 111 of the cell case 110. An electrolyte injection hole cover 139 closing the electrolyte injection hole 134 may be coupled to the cap plate 131.

The electrode terminal 140 may be disposed in the cap plate 131 and may include the coupling hole 143. The electrode terminal 140 may include a first body 141 exposed on an outer surface of the cap plate 131.

In the present disclosure, the "cap plate 131" may be defined as a plate on which the electrode terminal 140 is disposed. For example, when the electrode terminal 140 is disposed on at least one surface among a plurality of surfaces forming the exterior of the battery cell 100, a plate forming the surface on which the electrode terminal 140 is disposed may be referred to as the cap plate 131.

A cap assembly 130 may include the cap plate 131 and the electrode terminal 140. That is, the cap plate 131 and the electrode terminal 140 may be coupled to each other to form the cap assembly 130. The cap assembly 130 may be coupled to the cell case 110.

When both the ends of the cell case 110 are open, the cap assembly 130 may be coupled to each of both the ends of the cell case 110. For example, the cap assembly 130 may include a first cap assembly 130a coupled to the first opening 112a disposed at one side of the cell case 110 and a second cap assembly 130b coupled to the second opening 112b disposed at the other side of the cell case 110. Each of the first cap assembly 130a and the second cap assembly 130b may include the cap plate 131 and the electrode terminal 140.

The current collector 150 may electrically connect the electrode assembly 120 and the electrode terminal 140. The current collector 150 may include a current collecting plate 151 and a current collecting pin 155 connected to the current collecting plate 151. The current collector 150 may include the current collecting plate 151 electrically connected to the electrode assembly 120 and the current collecting pin 155 connected to the current collecting plate 151 and inserted into the coupling hole 143.

The current collecting plate 151 may have a plate shape and may be electrically connected to the electrode tab 125 of the electrode assembly 120. The current collecting plate 151 may be physically coupled to the electrode tab 125. For example, the electrode tab 125 may be bent to cover an outer surface of the current collecting plate 151, and the electrode tab 125 and the current collecting plate 151 may be welded in a state in which the electrode tab 125 covers the current collecting plate 151. For example, the electrode tab 125 and the current collecting plate 151 may be coupled by laser welding. However, a coupling structure and a coupling method between the electrode tab 125 and the current collecting plate 151 may be variously modified.

The current collecting pin 155 may have a pin shape extending from the current collecting plate 151 toward the electrode terminal 140. The current collecting pin 155 may protrude from the current collecting plate 151.

When the electrode tab 125 is bent to cover the outer surface of the current collecting plate 151, the electrode tab 125 may include a recess 126 to expose the current collector 150 outward from the electrode tab 125. For example, the recess 126 may have a notch shape or a groove shape in which a portion of the electrode tab 125 is cut.

The cell case 110 may include a vent hole 115, and a vent cover 160 may be coupled to the vent hole 115. For example, the vent cover 160 may be welded to the cell case 110 to cover the vent hole 115. However, a structure of the vent cover 160 is not limited to a structure attached to the vent hole 115, and the vent cover 160 may also be directly formed on a surface of the cell case 110 through machining, etching, but is not limited thereto.

Although FIGS. 1 through 3 illustrate that the vent hole 115 and the vent cover 160 are disposed in the cell case 110, the vent hole 115 and the vent cover 160 may also be disposed in the cap plate 131 (see FIG. 13).

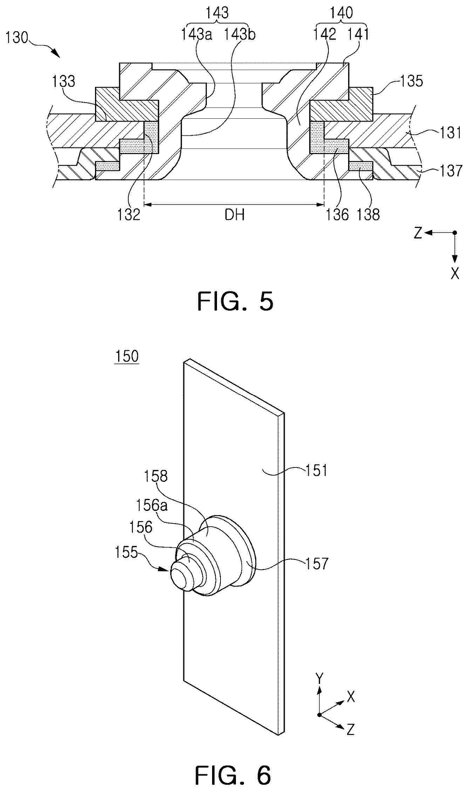

FIG. 4 is an exploded perspective view of the cap assembly 130 according to a preferred embodiment, and FIG. 5 is a cross-sectional view of the cap assembly 130 illustrated in FIG. 4. FIGS. 4 and 5 illustrate an exploded perspective view of the first cap assembly 130a illustrated in FIG. 2, and the second cap assembly 130b illustrated in FIG. 2 may also have a structure identical or similar to that of the first cap assembly 130a.

The cap assembly 130 is described with reference to FIGS. 4 and 5 together with FIG. 2. The cap assembly 130 may include the cap plate 131 and the electrode terminal 140 and may further include at least one of a terminal insulator 135, a gasket 136, a cap insulator 137, and a fixing plate 138.

The cap plate 131 may cover the open end of the cell case 110. The cap plate 131 may include a seating groove 133 in which the electrode terminal 140 is seated. The cap plate 131 may include the through-hole 132 for installation of the electrode terminal 140. The through-hole 132 may be disposed at the center of the seating groove 133. The through-hole 132 may have an inner diameter DH having a size through which at least a portion of the electrode terminal 140 passes.

The cap plate 131 may further include the electrolyte injection hole 134 for injecting an electrolyte into the accommodation space 111 of the cell case 110.

The electrode terminal 140 may include the first body 141 exposed on the outer surface of the cap plate 131 and a second body 142 connected to the first body 141 and inserted into the through-hole 132 of the cap plate 131. The first body 141 and the second body 142 may be manufactured separately and then coupled to each other. However, the first body 141 and the second body 142 may also be integrally formed.

The first body 141 may be exposed on the outer surface of the cap plate 131 and may be provided for electrical connection with the adjacent battery cell 100. For example, at least a portion of the first body 141 may have a plate shape. However, the first body 141 is not limited thereto. The first body 141 may be disposed in the seating groove 133 of the cap plate 131. The first body 141 may include a terminal hole 141a provided in a central region for installation of the second body 142.

The second body 142 may include the coupling hole 143 into which the current collecting pin 155 of the current collector 150 is inserted. For example, the coupling hole 143 may have a circular cross-section.

The coupling hole 143 may correspond to or be in contact with at least a portion of the current collecting pin 155. The coupling hole 143 may include regions having different inner diameters. For example, the coupling hole 143 may include a first region 143a disposed at an outer side and a second region 143b disposed more inward than the first region 143a and having a larger inner diameter. The first region 143a and the second region 143b may be connected to each other by an inclined surface or a curved surface whose width increases toward the second region 143b.

The second body 142 may be connected to the first body 141 through the terminal hole 141a of the first body 141. The second body 142 may couple the first body 141 and the cap plate 131 after being inserted into the terminal hole 141a of the first body 141 and the through-hole 132 of the cap plate 131. For example, the second body 142 may fix the first body 141 and the cap plate 131 by applying pressure thereto.

The second body 142 may have a rivet structure for coupling the cap plate 131 to the first body 141. In a state in which the second body 142 is inserted into the terminal hole 141a of the first body 141 and the through-hole 132 of the cap plate 131, at least one of an outer end and an inner end of the second body 142 may be press-deformed outward. The second body 142 may be press-deformed to fix the cap plate 131 and the first body 141.

The terminal insulator 135 may be disposed between the cap plate 131 and the electrode terminal 140 to electrically insulate the cap plate 131 from the electrode terminal 140. The terminal insulator 135 may be formed of an insulating material to electrically insulate the cap plate 131 from the first body 141. The terminal insulator 135 may have sealing properties to seal a space between the cap plate 131 and the first body 141.

The gasket 136 sealing a space between the cap plate 131 and the electrode terminal 140 may be disposed between the through-hole 132 of the cap plate 131 and the electrode terminal 140. The gasket 136 may be fitted into the through-hole 132 of the cap plate 131 and may seal a space between the through-hole 132 and the second body 142. The gasket 136 may seal a space between the electrode terminal 140 and the through-hole 132, thereby preventing a material inside the battery cell 100 from leaking outside the battery cell 100 or a material outside the battery cell 100 from being introduced into the battery cell 100. The gasket 136 may also serve to electrically insulate the electrode terminal 140 from the cap plate 131.

The gasket 136 may include a compressible insulating material for sealing and insulation. For example, the material of the gasket 136 may include at least one of polybutylene terephthalate (PBT) or perfluoroalkoxy alkane (PFA).

In a state in which the terminal insulator 135 and/or the gasket 136 is disposed between the cap plate 131 and the electrode terminal 140, the electrode terminal 140 and the cap plate 131 may be clinch-coupled.

Although FIGS. 4 and 5 illustrate that the terminal insulator 135 and the gasket 136 are separated from each other, the terminal insulator 135 and the gasket 136 may also have an integrated structure formed as a single member.

The cap insulator 137 electrically insulating the cap plate 131 from the current collector 150 or the electrode assembly 120 may be disposed on an inner surface of the cap plate 131.

The fixing plate 138 for protecting the cap insulator 137 when an inner portion of the second body 142 is press-deformed may be disposed between the cap plate 131 and the second body 142. The fixing plate 138 may be formed of a metal material. The fixing plate 138 may be formed of a rigid material to minimize deformation during clinch coupling.

FIGS. 4 and 5 illustrate an example of the cap assembly 130, and a shape or a structure of the first body 141, a shape or a structure of the second body 142, and a position, a shape, and a structure of a portion press-deformed in the second body 142 may be variously modified. In addition, the cap assembly 130 may not include at least one of the terminal insulator 135, the gasket 136, the cap insulator 137, and the fixing plate 138, and a shape or an arrangement structure of the terminal insulator 135, the gasket 136, the cap insulator 137, and the fixing plate 138 disposed in the cap assembly 130 may also be variously modified.

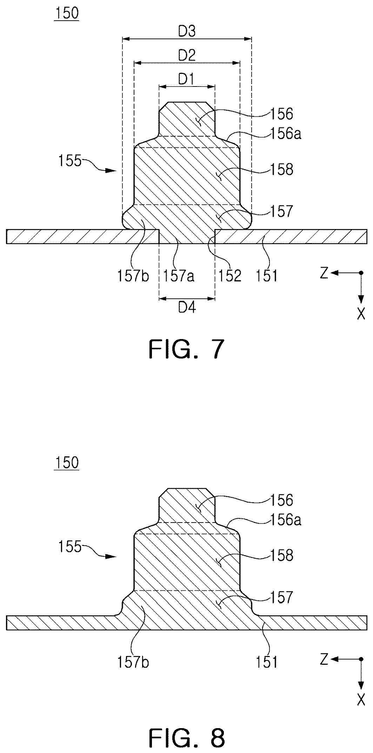

FIG. 6 is a perspective view of the current collector 150 according to a preferred embodiment. FIG. 7 is a cross-sectional view of the current collector 150 illustrated in FIG. 6.

The current collector 150 is described with reference to FIGS. 6 and 7 together with FIG. 5.

The current collector 150 may include the current collecting plate 151 and the current collecting pin 155. The current collecting plate 151 may have a plate shape and may be electrically connected to the electrode assembly 120 (see FIG. 2). The current collecting pin 155 may be connected to the current collecting plate 151 and may extend in a direction perpendicular to the surface of the current collecting plate 151.

The current collecting pin 155 may include a first portion 156 disposed at an outer side spaced apart from the current collecting plate 151, a third portion 157 connected to the current collecting plate 151, and a second portion 158 disposed between the first portion 156 and the third portion 157.

The first portion 156 of the current collecting pin 155 may be a portion provided for welding with the electrode terminal 140 and may be exposed outward from the electrode terminal 140 through the coupling hole 143. The second portion 158 may be disposed between the first portion 156 and the current collecting plate 151. The third portion 157 may be a portion connected to the cap plate and may be disposed closer to the cap plate than the second portion 158.

The current collecting pin 155 may have a diameter increasing overall from an outer end of the first portion 156 toward the current collecting plate 151.

At least one of an outer diameter D2 of the second portion 158 or a maximum outer diameter D3 of the third portion 157 may be greater than an outer diameter D1 of the first portion 156. When at least one of the outer diameter D2 of the second portion 158 or the maximum outer diameter D3 of the third portion 157 is greater than the outer diameter D1 of the first portion 156, heat occurring in the current collector 150 due to an increase in resistance of the current collector 150 during charging and/or discharging may be reduced. In addition, because an amount of heat occurring in the current collector 150 is reduced, degradation of performance and lifespan of the battery cell may be reduced.

An outer diameter of at least a portion of the third portion 157 may be greater than the outer diameter D1 of the first portion 156 and equal to or greater than the outer diameter D2 of the second portion 158. In this case, a change in cross-sectional area may be small in the third portion 157 to which the current collecting plate 151 and the current collector 150 are connected, thereby reducing resistance and heat occurring in the third portion 157 and the second portion 158 during charging and discharging.

The first portion 156 and the second portion 158 of the current collecting pin 155 may be connected by a connection surface 156a, and the connection surface 156a may have a diameter increasing from the first portion 156 toward the second portion 158. The connection surface 156a may be a surface connecting the first portion 156 and the second portion 158 and may be formed as an inclined surface or a curved surface. The connection surface 156a having an increasing diameter may be formed, thereby reducing an abrupt change in cross-sectional area and an increase in resistance and heat occurrence.

Referring to FIG. 5, the coupling hole 143 of the electrode terminal 140 may include the first region 143a in contact with a side surface (e.g., lateral surface) of the first portion 156 and the second region 143b in contact with a side surface (e.g., lateral surface) of the second portion 158. In this case, the first region 143a of the coupling hole 143 may have an inner diameter substantially identical to the outer diameter D1 of the first portion 156, and the second region 143b of the coupling hole 143 may have an inner diameter substantially identical to the outer diameter D2 of the second portion 158. When the first portion 156 and the second portion 158 of the current collecting pin 155 is in contact with the first region 143a and the second region 143b of the coupling hole 143, respectively, a current transfer area may increase, thereby reducing heat occurring in the current collecting pin 155.

The third portion 157 of the current collecting pin 155 may include a coupling portion 157a inserted into and coupled to an insertion hole 152 formed in the current collecting plate 151 and a diameter expansion portion 157b having a diameter greater than the outer diameter D2 of the second portion 158. The coupling portion 157a of the current collecting pin 155 may be inserted (e.g., fitted) into the insertion hole 152 of the current collecting plate 151. An outer diameter D4 of the coupling portion 157a may be set to have a size enabling the coupling portion 157a to be fitted into the insertion hole 152. The diameter expansion portion 157b may increase a cross-sectional area of a portion connected to the current collecting plate 151 to reduce an abrupt increase in resistance between the current collecting plate 151 and the current collecting pin 155.

The maximum outer diameter D3 of the third portion 157 may be greater than the outer diameter D2 of the second portion 158. For example, the diameter expansion portion 157b may have an outer diameter greater than the outer diameter D2 of the second portion 158. When the outer diameter D1 of the first portion 156, the outer diameter D2 of the second portion 158, and the outer diameter of the third portion 157 increase sequentially, a change in cross-sectional area may decrease, thereby significantly reducing resistance and heat occurrence during charging and discharging.

The current collecting pin 155 and the current collecting plate 151 may be manufactured separately and then coupled to each other to form the current collector 150. For example, the current collecting pin 155 and the current collecting plate 151 may be welded. A portion in which the current collecting pin 155 and the current collecting plate 151 are in contact with each other may be melted and then be solidified by welding, thereby forming a physically stable coupling state. In this case, current transfer may be smoothly performed through the portion in which the current collecting pin 155 and the current collecting plate 151 are welded, thereby stably securing a current flow from the electrode assembly 120 to the electrode terminal 140. However, a coupling manner between the current collecting pin 155 and the current collecting plate 151 is not limited to welding.

The current collecting pin 155 and the current collecting plate 151 may be welded to each other in a state in which the coupling portion 157a is inserted into the insertion hole 152. FIG. 7 illustrates that the coupling portion 157a of the current collecting pin 155 is inserted (e.g., fitted) into the insertion hole 152 from an upper side of the current collecting plate 151. However, a shape or a coupling manner of the current collecting pin 155 and the current collecting plate 151 may be variously modified. For example, the current collecting pin 155 may be inserted into the insertion hole 152 from a lower side of the current collecting plate 151.

In a cross-section perpendicular to a first direction (X-axis direction) in which the current collecting pin 155 extends from the current collecting plate 151, an outer circumferential surface of the current collecting pin 155 may have a circular cross-section. When the outer circumferential surface of the current collecting pin 155 has the circular cross-section, the coupling hole 143 (see FIG. 5) of the electrode terminal 140 into which the current collecting pin 155 is inserted may also have a circular cross-section. When the current collecting pin 155 and the coupling hole 143 have the circular cross-sections, the current collecting pin 155 may be easily inserted into the coupling hole 143.

An upper edge of the current collecting pin 155 may have a chamfer-shaped inclined surface. The inclined surface may guide entry of the current collecting pin 155 when the current collecting pin 155 is inserted into the coupling hole 143.

FIG. 8 is a cross-sectional view illustrating a modified example of the current collector 150 illustrated in FIG. 7.

Compared with the current collector 150 illustrated in FIG. 7, the current collector 150 illustrated in FIG. 8 is different in that the current collecting plate 151 and the current collecting pin 155 are integrally formed. The description provided with reference to FIGS. 6 and 7, excluding the differences, may also be applied to the description provided with reference to FIG. 8.

In the current collector 150 illustrated in FIG. 8, the current collecting pin 155 and the current collecting plate 151 may be integrally formed as a single body. That is, the current collecting pin 155 and the current collecting plate 151 may be integrally molded through forging but is not limited thereto.

When forging is performed, the current collecting plate 151 having a smaller thickness and the current collecting pin 155 having a greater thickness may be integrally molded. When the current collecting pin 155 and the current collecting plate 151 are integrally formed as a single member, the number of components included in the current collector 150 may decrease, thereby facilitating manufacturing of the battery cell 100.

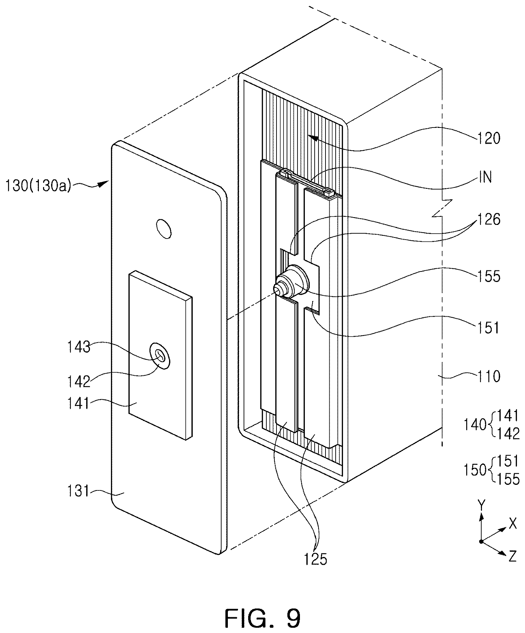

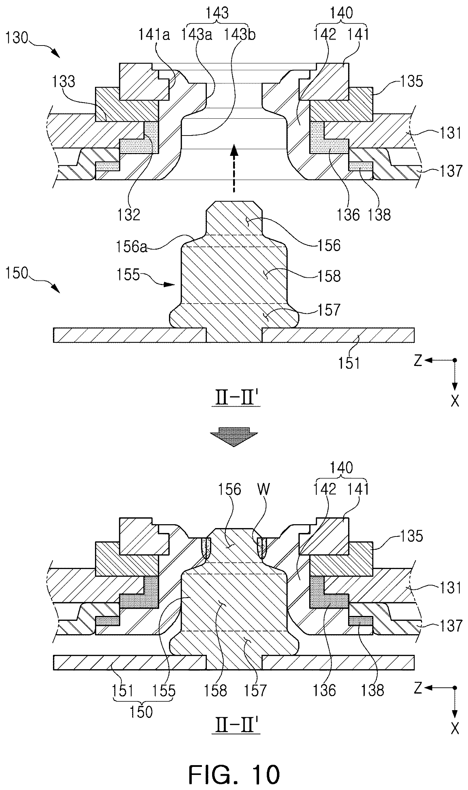

FIG. 9 is a perspective view illustrating a state before the cap assembly 130 and the current collector 150 are coupled to each other according to a preferred embodiment. FIG. 10 is a cross-sectional view taken along line II-II' of FIG. 1 and illustrating states before and after the cap assembly 130 and the current collector 150 are coupled to each other according to a preferred embodiment.

Referring to FIGS. 9 and 10, the cap assembly 130 may have the electrode terminal 140 and the cap plate 131 coupled to each other. The electrode terminal 140 may include the first body 141 exposed outward and the second body 142 connected to the first body 141. The second body 142 may have a rivet structure for coupling the cap plate 131 to the first body 141. The description provided with reference to FIG. 5 may be applied to a structure of the cap assembly 130.

The current collector 150 may include the current collecting plate 151 and the current collecting pin 155. The current collecting plate 151 may be electrically connected to the electrode assembly 120 accommodated in the cell case 110. For example, the electrode tab 125 of the electrode assembly 120 may be welded to the current collecting plate 151 while covering the outer surface of the current collecting plate 151. The recess 126 may be formed in the electrode tab 125 to prevent the electrode tab 125 from interfering with the current collecting pin 155 when the electrode tab 125 covers the outer surface of the current collecting plate 151. A current collecting insulator IN may be disposed between an inner surface of the current collecting plate 151 and the electrode assembly 120 to insulate the current collecting plate 151 from a body portion of the electrode assembly 120.

In a state in which the electrode assembly 120 and the current collector 150 are coupled to each other, the electrode assembly 120 may be accommodated in the cell case 110. The cap assembly 130 may cover the open end of the cell case 110. The cap assembly 130 and the cell case 110 may be welded at a contact portion and coupled to each other.

As the cap assembly 130 approaches the cell case 110, the current collecting pin 155 of the current collector 150 may be inserted into the coupling hole 143 of the electrode terminal 140. The first portion 156 of the current collecting pin 155 may be in contact with the first region 143a of the coupling hole 143, and the second portion 158 of the current collecting pin 155 may be in contact with the second region 143b of the coupling hole 143. When a contact area between the current collecting pin 155 and the electrode terminal 140 increases, a current transfer area may increase, thereby reducing heat occurring in the current collecting pin 155. However, in order to easily insert the current collecting pin 155 into the coupling hole 143, the second portion 158 of the current collecting pin 155 may not be in contact with the second region 143b of the coupling hole 143.

In addition, to enlarge the contact area, the connection surface 156a between the first portion 156 and the second portion 158 may also be in contact with an inner circumferential surface of the coupling hole 143. However, the connection surface 156a is not limited thereto.

In a state in which the current collecting pin 155 is inserted (e.g., fitted) into the coupling hole 143 of the electrode terminal 140, the current collecting pin 155 may be welded to the electrode terminal 140. The first portion 156 of the current collecting pin 155 and the electrode terminal 140 may be welded along a boundary between the first portion 156 and the electrode terminal 140. The current collecting pin 155 may be welded to the second body 142 of the electrode terminal 140.

A welding portion W may be formed by solidification of molten metal by welding of the electrode terminal 140 and the current collecting pin 155. The welding portion W may be formed along a boundary between the first portion 156 of the current collecting pin 155 and the electrode terminal 140.

The outer diameter D1 of the first portion 156 and the outer diameter D2 of the second portion 158 of the current collecting pin 155 are described with reference to FIGS. 9 and 10 together with FIG. 7.

The outer diameter D1 of the first portion 156 of the current collecting pin 155 may be 1 mm or more. The welding portion W may be formed along the boundary between the first portion 156 of the current collecting pin 155 and the second body of the electrode terminal 140. Accordingly, when the outer diameter D1 of the first portion 156 is less than 1 mm, welding between the current collecting pin 155 and the electrode terminal 140 may be incomplete, thereby failing to secure stable coupling. In addition, when the outer diameter of the first portion is less than 1 mm, a welding line of the welding portion W may be excessively short, thereby interrupting a smooth current flow between the current collecting pin 155 and the electrode terminal 140. The outer diameter D1 of the first portion 156 may be smaller than the outer diameter D2 of the second portion 158.

The outer diameter D2 of the second portion 158 may be 1.05 times or more the outer diameter D1 of the first portion 156 and smaller than the inner diameter DH of the through-hole 132.

When the outer diameter D2 of the second portion 158 is less than 1.05 times the outer diameter D1 of the first portion 156, a difference in cross-sectional area between the second portion 158 and the first portion 156 may be excessively small, and it may thus be difficult to expect a reduction in heat occurrence due to an increase in cross-sectional area of the second portion 158. In addition, when a difference in cross-sectional area between the second portion 158 and the first portion 156 is small, the outer diameter D1 of the first portion 156 may increase. In this case, the welding path may become longer, and the welding heat input may thus increase, and accordingly, a temperature of the current collector 150 may increase, thereby causing damage to components adjacent to the current collector 150, such as the electrode assembly.

The coupling hole 143 of the electrode terminal 140 may be disposed inside the through-hole 132 of the cap plate, and the outer diameter D2 of the second portion 158 inserted into the coupling hole 143 may thus be set to be smaller than an inner diameter of the through-hole 132.

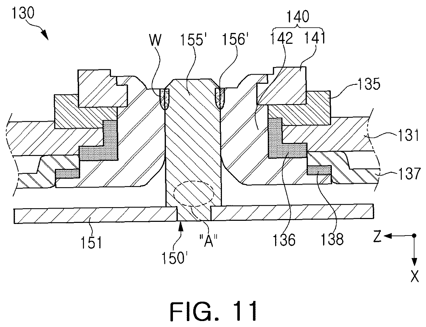

FIG. 11 is a cross-sectional view illustrating a state in which the cap assembly and a current collector 150' are coupled to each other according to a comparative example.

Compared with the embodiment illustrated in FIG. 10, the comparative example illustrated in FIG. 11 differs only in a shape of the current collecting pin 155' of the current collector 150'. That is, in the comparative example illustrated in FIG. 11, the cap assembly 130 is identical to the cap assembly 130 illustrated in FIG. 10, and the current collecting pin 155' extends from the current collecting plate 151 and has a constant cross-section (diameter).

In the modified example illustrated in FIG. 11, a portion A at which the current collecting pin 155' and the current collecting plate 151 are connected to each other has a large change in cross-sectional area. That is, in the current collecting pin 155', the portion A at which the current collecting plate 151 is connected thereto has a cross-sectional area abruptly decreased compared to the current collecting plate 151, and resistance may significantly increase. Accordingly, heat may occur and a temperature may increase in the portion A at which the current collecting pin 155' and the current collecting plate 151 are connected to each other. In this case, performance and lifespan of the battery cell may be degraded.

On the other hand, according to a preferred embodiment of the present disclosure, as illustrated in an example in FIG. 10, the outer diameter D2 of the second portion 158 and/or the maximum outer diameter D3 of the third portion 157 in the current collecting pin 155 may be greater than the outer diameter D1 of the first portion 156, thereby reducing heat occurring in the current collector 150 due to an increase in resistance of the current collector 150 during charging and/or discharging. In addition, an amount of heat occurring in the current collector 150 may be reduced, thereby preventing degradation of performance and lifespan of the battery cell.

Meanwhile, in the comparative example of FIG. 11, when a diameter of the current collecting pin 155' is increased to reduce heat occurring in the current collecting pin 155', a welding path may become longer when the current collecting pin 155' and the electrode terminal 140 are welded to each other, thereby increasing the welding heat input. Accordingly, in the comparative example, due to welding heat, a temperature of the current collector 150' may increase, thereby causing damage to components adjacent to the current collector 150' such as an electrode assembly.

On the other hand, according to a preferred embodiment of the present disclosure, as illustrated as an example in FIG. 10, the outer diameter D1 of the first portion 156 may be smaller than the outer diameter D2 of the second portion 158 and/or the maximum outer diameter D3 of the third portion 157. When the outer diameter D1 of the first portion 156 is small, because a welding path becomes shorter when the current collecting pin 155 and the electrode terminal 140 are welded, a welding heat input decreases, and accordingly, a phenomenon in which a temperature of the current collector 150 increases due to welding heat and components adjacent to the current collector 150, such as the electrode assembly, are damaged may be reduced or prevented.

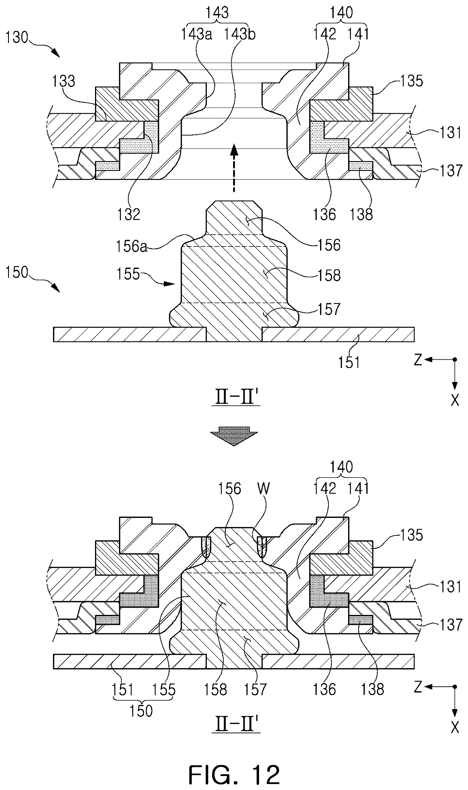

FIG. 12 is a cross-sectional view illustrating states before and after the cap assembly 130 and the current collector 150 are coupled to each other according to another preferred embodiment.

Compared with the embodiments described with reference to FIGS. 1 through 10, another preferred embodiment illustrated in FIG. 12 is different only in that the first body 141 and the second body 142 of the electrode terminal 140 are integrally formed. The description provided with reference to FIGS. 1 through 10, excluding the differences, may also be applied to the description provided with reference to FIG. 12.

The electrode terminal 140 may have the first body 141 and the second body 142 integrally formed as a single body and the electrode terminal 140 may be rivet-coupled to the cap plate 131.

The first body 141 may be a portion exposed on the outer surface of the cap plate 131, and the second body 142 may be a portion inserted into the through-hole 132 of the cap plate 131, and the first body 141 and the second body 142 may be integrally formed as a single member.

When the first body 141 and the second body 142 are integrally formed, the electrode terminal 140 may function as the rivet-type electrode terminal 140 having a rivet function by itself. In the embodiment illustrated in FIG. 12, the electrode terminal 140 may clinch at least one of the outer surface or the inner surface of the cap plate 131.

At least one of the terminal insulator 135, the gasket 136, the cap insulator 137, and the fixing plate 138 may be disposed between the electrode terminal 140 and the cap plate 131, and the electrode terminal 140 may form a rivet structure for simultaneously clinching and coupling components disposed between the electrode terminal 140 and the cap plate 131.

FIG. 13 is a perspective view of a battery cell 100a according to another preferred embodiment.

Unlike the embodiments illustrated in FIGS. 1 through 10, the battery cell 100a illustrated in FIG. 13 is different in a shape of the cell case 110 and an arrangement structure of the cap assembly 130.

In another preferred embodiment illustrated in FIG. 13, the battery cell 100a may include the cell case 110 having one side open and the cap assembly 130 covering an open one side end of the cell case 110. The cap assembly 130 may include the cap plate 131 and two electrode terminals 140 disposed in the cap plate 131. In the battery cell 100a according to another preferred embodiment, the two electrode terminals 140 may be disposed in one cap plate 131. In a state in which the current collecting pin 155 is fitted into each electrode terminal 140, the current collecting pin 155 may be welded to the electrode terminal 140.

A connection structure between the current collecting pin 155 of the current collector 150 and the electrode terminal 140 described with reference to FIGS. 1 through 10 and 12 may also be applied to the battery cell 100a having the two electrode terminals 140 disposed to face the same direction.

FIG. 14 is a perspective view of a battery cell 100b according to another preferred embodiment.

Unlike the embodiments illustrated in FIGS. 1 through 10, the battery cell 100b illustrated in FIG. 14 is different in that the battery cell 100b is configured as a cylindrical cell.

Also in the case of the cylindrical battery cell 100b, the cylindrical battery cell 100b may include the electrode terminal 140 and the cap plate 131 in which the electrode terminal 140 is disposed. The cap plate 131 may be formed separately from the cell case 110. However, the cap plate 131 may also be integrally formed with the cell case 110. In a state in which the current collecting pin 155 is inserted into the electrode terminal 140, the current collecting pin 155 may be welded to the electrode terminal 140.

The connection structure between the current collecting pin 155 of the current collector 150 and the electrode terminal 140 described with reference to FIGS. 1 through 10 and 12 may also be applied to the cylindrical battery cell 100b.

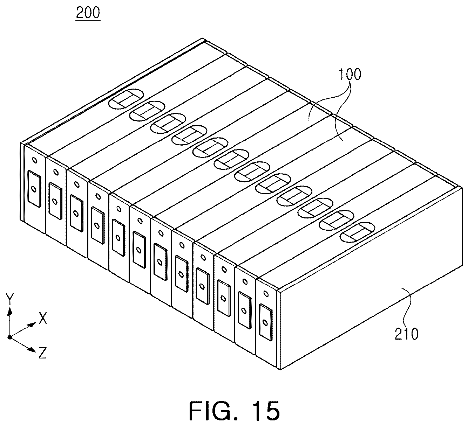

FIG. 15 is a perspective view of a battery device 200 according to a preferred embodiment.

The battery device 200 illustrated in FIG. 15 may include the plurality of battery cells 100. The battery cells 100 may be arranged in a predetermined form to form a cell assembly. For example, the battery cell 100 described with reference to FIGS. 1 through 10 may be applied to the battery cell 100.

The battery device 200 may include a side plate 210 covering at least one surface of the plurality of battery cells 100 to protect the plurality of battery cells 100. The side plate 210 may be provided as a part of a device housing of the battery device 200. For example, the side plates 210 may be disposed at both ends of the plurality of battery cells 100. However, the side plate 210 or the device housing may be applied in various forms.

As set forth above, according to a preferred embodiment of the present disclosure, heat occurring in the current collector due to an increase in resistance of the current collector during charging and/or discharging of the battery cell may be reduced.

According to a preferred embodiment of the present disclosure, damage to the electrode assembly due to welding heat may be reduced or prevented.

## Claims

1. A battery cell comprising:
an electrode assembly including a cathode, an anode, and a separator;
a cell case accommodating the electrode assembly;
a cap plate connected to the cell case and including a through-hole;
an electrode terminal disposed in the through-hole of the cap plate and including a coupling hole; and
a current collector electrically connecting the electrode assembly and the electrode terminal,
wherein the current collector includes a current collecting plate electrically connected to the electrode assembly and a current collecting pin connected to the current collecting plate and inserted into the coupling hole,
the current collecting pin includes a first portion disposed at an outer side spaced apart from the current collecting plate, a third portion connected to the current collecting plate, and a second portion disposed between the first portion and the third portion, and
at least one of an outer diameter of the second portion or a maximum outer diameter of the third portion is greater than an outer diameter of the first portion.

2. The battery cell of claim 1, wherein an outer diameter of at least a portion of the third portion is greater than the outer diameter of the first portion and equal to or greater than the outer diameter of the second portion.

3. The battery cell of claim 1 or claim 2, wherein the coupling hole of the electrode terminal includes a first region in contact with a side surface of the first portion and a second region in contact with a side surface of the second portion.

4. The battery cell of any one of claims 1 to 3, wherein the electrode terminal includes a first body exposed on an outer surface of the cap plate and a second body connected to the first body and inserted into the through-hole of the cap plate.

5. The battery cell of claim 4, wherein the second body has a rivet structure for coupling the cap plate to the first body.

6. The battery cell of claim 4, wherein the electrode terminal has the first body and the second body integrally formed as a single body and the electrode terminal is rivet-coupled to the cap plate.

7. The battery cell of any one of claims 1 to 6, wherein the first portion of the current collecting pin and the electrode terminal are welded along a boundary between the first portion and the electrode terminal.

8. The battery cell of any one of claims 1 to 7, wherein the first portion and the second portion of the current collecting pin are connected by a connection surface, and the connection surface has a diameter increasing from the first portion toward the second portion.

9. The battery cell of any one of claims 1 to 8, wherein the outer diameter of the first portion is 1 mm or more, and the outer diameter of the second portion is 1.05 times or more the outer diameter of the first portion and smaller than an inner diameter of the through-hole.

10. The battery cell of any one of claims 1 to 9, wherein the maximum outer diameter of the third portion is greater than the outer diameter of the second portion.

11. The battery cell of any one of claims 1 to 10, wherein the third portion of the current collecting pin includes a coupling portion inserted into and coupled to an insertion hole formed in the current collecting plate and a diameter expansion portion having a diameter greater than the outer diameter of the second portion.

12. The battery cell of any one of claims 1 to 11, wherein the current collecting pin and the current collecting plate are welded.

13. The battery cell of any one of claims 1 to 12, wherein the current collecting pin and the current collecting plate are integrally formed as a single body.

14. A current collector for a battery cell, the current collector comprising:
a current collecting plate; and
a current collecting pin connected to the current collecting plate,
wherein the current collecting pin includes a first portion disposed at an outer side spaced apart from the current collecting plate, a third portion connected to the current collecting plate, and a second portion disposed between the first portion and the third portion, and
at least one of an outer diameter of the second portion or a maximum outer diameter of the third portion is greater than an outer diameter of the first portion.

15. The current collector of claim 14, wherein an outer diameter of at least a portion of the third portion is greater than the outer diameter of the first portion and equal to or greater than the outer diameter of the second portion.
